# EUROPEAN PATENT APPLICATION

(11) **EP 1 118 841 A2**
(43) Date of publication of application: **25.07.2001**
(21) Application number: 01300489.0
(22) Date of filing: 19.01.2001
(51) Int. Cl.: G01F 1/32

(54) **Vortex flowmeter for bidirectional flow**

(30) Priority: 20.01.2000 JP 2000011608; 15.02.2000 JP 2000036904
(71) Applicant: NGK SPARK PLUG CO., LTD, Mizuho-ku Nagoya-shi Aichi (JP)
(72) Inventor: Abe, Chikanori, c/o NGK Spark Plug Co., Ltd., Nagoya, Aichi (JP)
(74) Representative: Nicholls, Michael John

(57) **Abstract**

A vortex flowmeter is disclosed which is capable of measuring the flow rate of fluid flowing through a pipe bidirectionally or in a pulsating manner while measurement error is substantially nulled. The vortex flowmeter includes a first vortex-generating body 2a disposed within a pipe 1 for generating a Karman vortex m for a flow in one direction, a second vortex-generating body 2b disposed within the pipe 1 for generating a Karman vortex m for a flow in the opposite direction, and vortex detection means X and Y for detecting a Karman vortex generated by each of the vortex-generating bodies 2a and 2b. When applied to the case where backward flow is generated in fluid flowing through a pipe in a regular direction to thereby cause a pulsating flow, the vortex detection means X and Y detect the Karman vortexes, and subtraction is performed on output values represented by, for example, the number of pulses to thereby take into account the influence of backward flow on the regular flow, thereby determining an accurate flow rate.

## Description

The present invention relates to a vortex flowmeter for measuring the flow rate of fluid.

Japanese Patent Application Laid-Open (*kokai*) No. 9-257532 discloses, as means for measuring the flow rate of fluid (gas or liquid), a vortex flowmeter which includes a vortex-generating body disposed within a pipe through which the fluid flows and adapted to generate Karman vortexes, and vortex detection means. The vortex detection means detect the generated Karman vortexes through use of an ultrasonic transmitter and an ultrasonic receiver and counts the number of vortex pulses, each of which is generated in response to generation of corresponding vortex, thereby determining the flow rate. Since the vortex flowmeter does not include any moving component, the vortex flowmeter is advantageous in that detection delay is slight and signal digitization is easy, since an output from the vortex flowmeter is a pulse signal corresponding to generation of a Karman vortex.

The above-described configuration is adapted to measure Karman vortexes generated behind a vortex-generating body for a flow in a single direction; therefore, the vortex flowmeter of the configuration can measure a flow rate merely for a unidirectional flow. Therefore, the vortex flowmeter is not applicable to measurement of flow rate for a bidirectional flow.

Furthermore, in the case where a flow in a regular direction is accompanied by generation of a flow in the opposite direction, backward flow is not subtracted in the course of calculation of flow rate, thereby causing an error in the calculation. The problem arises when the vortex flowmeter is applied to measurement of the flow rate of blow-by gas in an industrial vehicle.

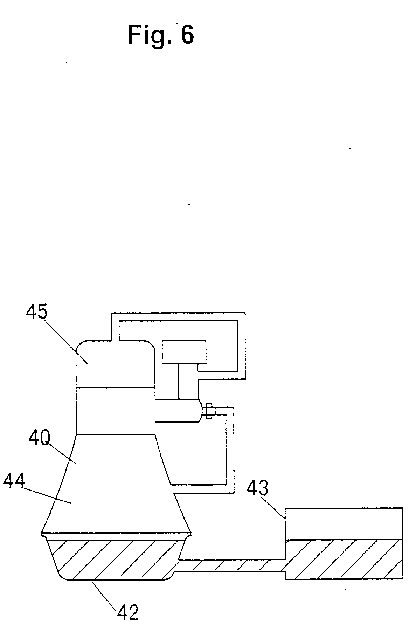

Specifically, in an industrial vehicle or the like, as shown in FIG. 6, an engine 40 is equipped with a lubricating oil tank 43 of large capacity, as well as an oil pan 42. The lubricating oil tank 43 is intended to lessen the burden of engine oil maintenance (replacement) and is connected to the oil pan 42 so as to supply oil to the oil pan 42 when the amount of oil contained in the oil pan 42 decreases due to, for example, consumption. Meanwhile, in such an engine, blow-by gas, which flows from a combustion chamber into a crankcase 44 or a valve chamber 45 located on a cylinder head, is recirculated to a suction line so as to be combusted again. In this case, oil mist contained in blow-by gas is also conveyed to the suction line, causing consumption of oil. In order to manage such consumption of oil, the flow rate of blow-by gas in an outflow line extending from the oil pan 42 must be measured. The vortex flowmeter is conceivably applicable to the measurement, because of the above-mentioned advantage thereof. However, measurement by means of the vortex flowmeter involves large error. Specifically, during overlapping of intake and exhaust, or during intake effected through rising of a piston, a pulsating flow arises due to backward flow. As mentioned above, the vortex flowmeter is intended to detect a flow rate for a unidirectional flow and thus does not take into account the backward flow, which serves as a negative factor with respect to the flow rate of blow-by gas and causes a reduction in the net flow rate of blow-by gas. Thus, a flow rate obtained by the vortex flowmeter includes large error.

An object of the present invention is to provide a vortex flowmeter capable of measuring the flow rate of fluid flowing through a pipe bidirectionally or in a pulsating manner while minimizing measurement error.

A first aspect of the invention provides a vortex flowmeter comprising a first vortex-generating body disposed within a pipe for generating a Karman vortex for a flow in one direction, a second vortex-generating body disposed within the pipe for generating a Karman vortex for a flow in the opposite direction, and vortex detection means for detecting a Karman vortex generated by means of the first vortex-generating body and/or the second vortex-generating body.

In the case where fluid flows bidirectionally within a pipe, the first vortex-generating body causes generation of a Karman vortex for a flow in one direction, and the second vortex-generating body causes generation of a Karman vortex for a flow in the other direction. The vortex detection means detects the Karman vortexes. Notably, the vortex detection means may be used in common or may be provided for each of the vortex-generating bodies.

Preferably, when the vortex detection means is to be used in common, a vortex generation region is established between the first and second vortex-generating bodies such that the first and second vortex-generating bodies cause generation of Karman vortexes therein, and a single vortex detection means is provided for detecting a Karman vortex generated in the vortex generation region.

Advantageously, the vortex flowmeter of the present invention is applied not only to measurement of a flow rate in the case where fluid flows through a pipe bidirectionally in association with changeover of the direction of supply or discharge, but also to accurate measurement of the flow rate of fluid flowing in a regular direction in the case where backward flow is generated in the fluid flowing through a pipe in the regular direction, causing a pulsating flow. In the latter case, vortex detection means is provided for each of the two vortex-generating bodies.

A further aspect of the invention provides a vortex flowmeter comprising a first vortex-generating body disposed within a pipe for generating a Karman vortex for a flow in a regular direction, a second vortex-generating body disposed within the pipe for generating a Karman vortex for a flow in the opposite direction, first vortex detection means for detecting a Karman vortex generated by the first vortex-generating body, and second vortex detection means for detecting a Karman vortex generated by the second vortex-generating body. The vortex flowmeter is further characterized in that an output from the second vortex detection means is subtracted from an output from the first vortex detection means to thereby determine a net flow rate.

In the above-mentioned configuration, when fluid flows through the pipe in the regular direction, the first vortex-generating body causes generation of a Karman vortex, which is detected by the first vortex detection means. When fluid flows backward, the second vortex-generating body causes generation of a Karman vortex, which is detected by the second vortex detection means. An output value corresponding to a Karman vortex generated for backward flow is subtracted from an output value corresponding to a Karman vortex generated for regular flow, thereby calculating a net flow rate.

The vortex detection means may be composed of a pair of an ultrasonic transmitter and an ultrasonic receiver disposed in opposition to each other with respect to the Karman vortex generation region, and a vortex signal receiver circuit for generating a vortex signal corresponding to generation of a Karman vortex on the basis of a received-wave signal of the ultrasonic receiver.

When first vortex detection means for detecting a Karman vortex generated by means of the first vortex-generating body and second vortex detection means for detecting a Karman vortex generated by means of the second vortex-generating body are provided, each of the first and second vortex detection means may be composed of a pair of an ultrasonic transmitter and an ultrasonic receiver disposed in opposition to each other with respect to the Karman vortex generation region, and the vortex signal receiver circuit generating a vortex signal corresponding to generation of a Karman vortex on the basis of a received-wave signal of the ultrasonic receiver; and a common ultrasonic transmitter is shared as the ultrasonic transmitters of the first vortex detection means and the second vortex detection means. In this case, the number of components can be decreased in order to make the apparatus less expensive.

Fluid flowing through a pipe to which the present invention is applied encompasses gas and liquid.

Embodiments of the invention will now be described, by way of example only, with reference to the accompanying drawings in which:-
FIG. 1 is a longitudinal sectional view showing a first embodiment of a vortex flowmeter according to the present invention.
FIG. 2 is a longitudinal sectional view showing a second embodiment of a vortex flowmeter according to the present invention.
FIG. 3 is a longitudinal sectional view showing a third embodiment of a vortex flowmeter according to the present invention.
FIG. 4 is a longitudinal sectional view showing a fourth embodiment of a vortex flowmeter according to the present invention.
FIG. 5 is a longitudinal sectional view showing an example of an ultrasonic transmitter-receiver 20.
FIG. 6 is a conceptual view showing blow-by gas generation mechanism in an industrial vehicle.

Reference numerals are used to identify some of the items shown in the drawings as follows:
1: pipe
2a: first vortex-generating body
2b: second vortex-generating body
3, 3a, 3b: ultrasonic transmitters
4, 4a, 4b: ultrasonic receivers
5, 5a, 5b: ultrasonic oscillator circuit
6, 6a, 6b: receiver circuit
7: phase comparator
8: comparator
10: subtractor circuit
11: counter circuit
20: ultrasonic transmitter-receiver
X, Y, Z: vortex detection means

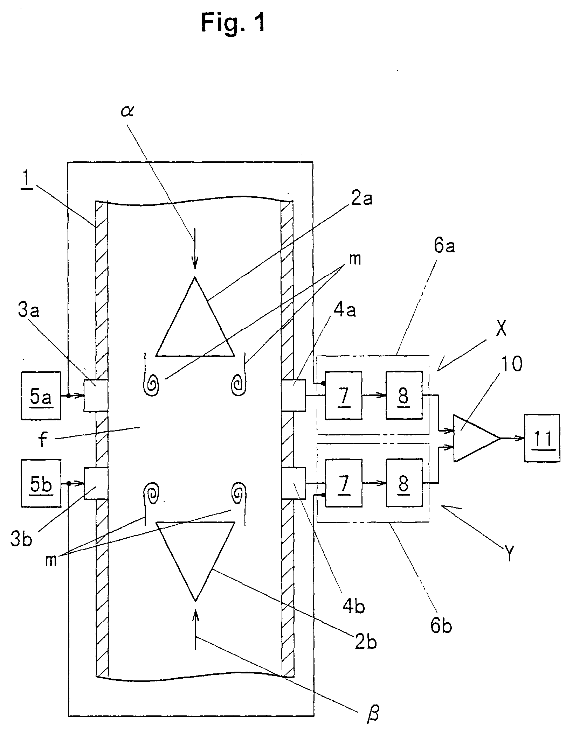

FIG. 1 shows a first embodiment. A first vortex-generating body 2a assuming the form of a triangular prism is disposed within a pipe 1 through which the above-mentioned blow-by gas of an industrial vehicle or the like flows, at the center of the pipe 1 in such a manner as to face a flow in the regular direction. Similarly, a second vortex-generating body 2b assuming the form of a triangular prism is disposed in such a manner as to face a flow in the opposite direction. A vortex generation region f is formed therebetween.

An ultrasonic transmitter 3a and an ultrasonic receiver 4a are located behind (on the rear side of) the first vortex-generating body 2a and are fixedly attached to a pipe wall such that the transmission face of the ultrasonic transmitter 3a and the reception face of the ultrasonic receiver 4a face each other. An ultrasonic oscillator circuit 5a is connected to the ultrasonic transmitter 3a, whereas a receiver circuit 6a is connected to the ultrasonic receiver 4a. The ultrasonic transmitter 3a, the ultrasonic receiver 4a, the ultrasonic oscillator circuit 5a, and the receiver circuit 6a constitute first vortex detection means X.

An ultrasonic transmitter 3b and an ultrasonic receiver 4b are located behind (on the front side of) a back portion of the second vortex-generating body 2b and are fixedly attached to the pipe wall such that the transmission face of the ultrasonic transmitter 3b and the reception face of the ultrasonic receiver 4b face each other. An ultrasonic oscillator circuit 5b is connected to the ultrasonic transmitter 3b, whereas a receiver circuit 6b is connected to the ultrasonic receiver 4b. The ultrasonic transmitter 3b, the ultrasonic receiver 4b, the ultrasonic oscillator circuit 5b, and the receiver circuit 6b constitute second vortex detection means Y. The receiver circuits 6a and 6b each include a phase comparator 7 and a comparator 8.

The receiver circuit 6a of the vortex detection means X and the receiver circuit 6b of the vortex detection means Y are connected to a subtractor circuit 10. The subtractor circuit 10 is connected to a counter circuit 11.

Notably, a full-wave rectifier (full-waver rectifier circuit) for full-wave rectifying a vortex signal may be interposed between the phase comparator (vortex signal generator circuit) 7 and the comparator (pulser circuit) 8. The effect of disposition of the full-wave rectifier is disclosed in Japanese Patent Application Laid-Open (*kokai*) No. 9-257532, and thus repeated description thereof is omitted.

In the above-mentioned configuration, when fluid flows through the pipe in the regular direction (arrow α in FIG. 1), Karman vortexes m are generated behind the first vortex-generating body 2a. In the first vortex detection means X, disturbance by the vortexes causes phase modulation to ultrasonic waves radiated from the ultrasonic transmitter 3a. Specifically, when the Karman vortexes m are not generated, a received-wave signal captured by the ultrasonic receiver 4a has a constant phase difference. When the Karman vortexes m are generated, the Karman vortexes m cause phase modulation to ultrasonic waves. As a result, the phase difference of a received signal varies. The phase comparator 7 compares phase between a drive signal and the received-wave signal and generates an alternating signal assuming the form of a sine wave on the basis of variation of the obtained phase difference. The comparator 8 converts a signal received from the phase comparator 7 into pulses while using the value "0" as reference.

When a backward flow (arrow β in FIG. 1) is generated within the pipe, the Karman vortexes m are also generated behind the second vortex-generating body 2b. The ultrasonic receiver 4b outputs a signal corresponding to the number of the generated Karman vortexes m in a manner similar to that described above.

The signals corresponding to the number of the generated Karman vortexes m output from the ultrasonic receivers 4a and 4b are input to the subtractor circuit 10. In the subtractor circuit 10, pulse signals from the ultrasonic receiver 4a and pulse signals from the ultrasonic receiver 4b undergo subtraction. Subsequently, the counter circuit 11 calculates a flow rate. As described above, the pulse signals representing the regular and backward flows are subtracted in order to calculate a flow rate. Therefore, the influence of the backward flow on the regular flow is taken into account in the course of calculation of flow rate, so that a most possibly accurate flow rate is calculated.

Notably, since pulse signals are output from the comparators 8, the difference therebetween can be computed by used of a software program or the like so as to calculate the flow rate. Therefore, the subtractor circuit 10 and the counter circuit 11 may be replaced with other structural means.

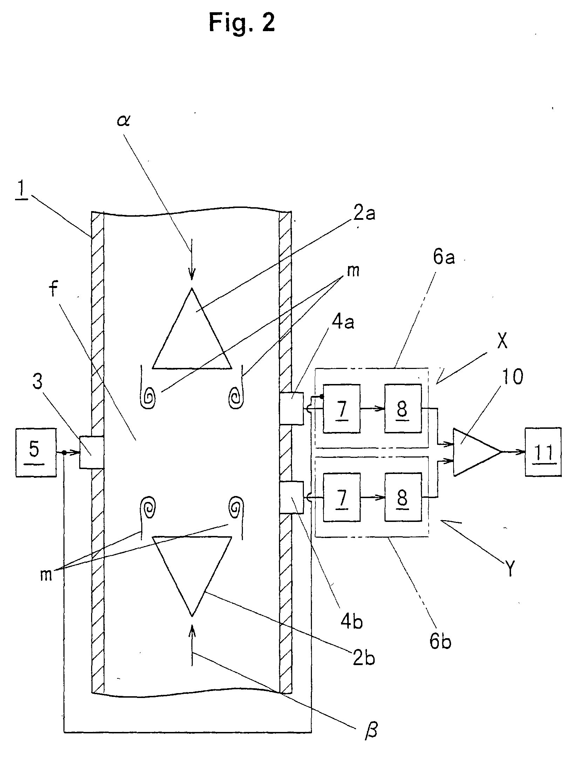

FIG. 2 shows a second embodiment of the present invention. As shown in FIG. 2, the ultrasonic transmitters 3a and 3b and the ultrasonic oscillator circuits 5a and 5b appearing in the above-described first embodiment are integrated into a common ultrasonic transmitter 3 and a common ultrasonic oscillator circuit 5. According to the second embodiment, the distance between the first and second vortex-generating bodies 2a and 2b is decreased so as to form a common vortex generation region f, and broad directivity is imparted to the ultrasonic transmitter 3. The Karman vortexes generated by means of the first and second vortex-generating bodies 2a and 2b are irradiated with ultrasonic waves transmitted from the ultrasonic transmitter 3. The ultrasonic waves are then received by the ultrasonic receivers 4a and 4b. The second embodiment features a reduced number of components.

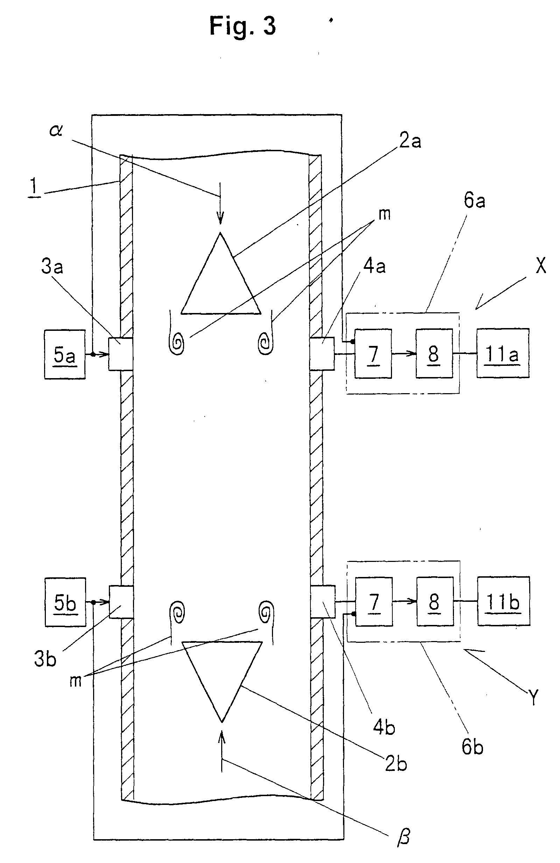

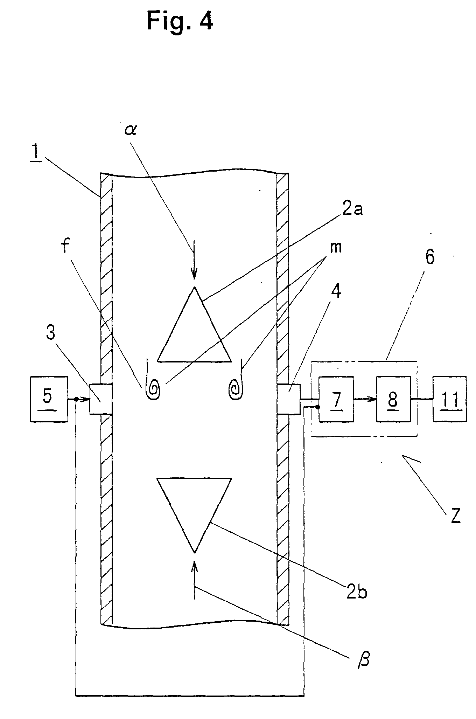

In the above-described first and second embodiments, the regular flow is canceled out by the backward flow in order to calculate a most possibly accurate flow rate. However, the first vortex-generating body 2a and the second vortex-generating body 2b may be disposed in order to discretely measure a flow rate in one direction (arrow α in FIGS. 1 and 2) and a flow rate in the opposite direction (arrow β in FIGS. 1 and 2). Structures for enabling such discrete measurement will be described in embodiments shown in FIGS. 3 and 4.

FIG. 3 shows a third embodiment of the present invention. The configuration of the third embodiment is similar to that of the first embodiment (FIG. 1) except that the subtractor circuit 10 is eliminated. Counter circuits 11a and 11b calculate a flow rate in one direction and a flow rate in the opposite direction discretely on the basis of the number of pulses received from the receiver circuit 6a and that received from the receiver circuit 6b. The direction of flow can be readily analyzed by detecting which one of the receiver circuits 6a and 6b generates a pulse signal.

FIG. 4 shows a fourth embodiment of the present invention. The first vortex-generating body 2a and the second vortex-generating body 2b are disposed within the pipe 1. A single vortex detection means Z is disposed in the vortex generation region fused in common between the first and second vortex-generating bodies 2a and 2b. Counting is performed through use of the ultrasonic transmitter 3 of broad directivity and an ultrasonic receiver 4 of broad directivity. The configuration of the fourth embodiment features a most possibly reduced number of components. The vortex detection means Z is configured in the following manner. The ultrasonic transmitter 3 and the ultrasonic receiver 4 are fixedly attached to a pipe wall corresponding to the vortex generation region f formed between the first vortex-generating body 2a and the second vortex-generating body 2b such that the transmission face of the ultrasonic transmitter 3 and the reception face of the ultrasonic receiver 4 face each other. An ultrasonic oscillator circuit 5 is connected to the ultrasonic transmitter 3, whereas a receiver circuit 6 is connected to the ultrasonic receiver 4. The vortex detection means Z is connected to a counter circuit 11 for calculation of flow rate.

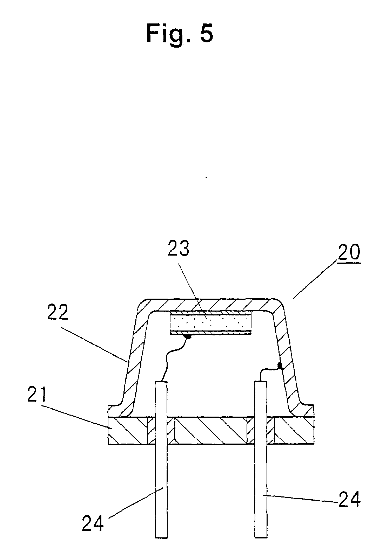

FIG. 5 shows an example of an ultrasonic transmitter-receiver 20 for use as the ultrasonic transmitters 3, 3a, and 3b and as the ultrasonic receivers 4, 4a, and 4b. The ultrasonic transmitter-receiver 20 is configured in the following manner. A casing 22 assuming the form of a truncated cone is attached to a bottom plate 21 in a covering condition. A piezoelectric element 23 having input and output electrodes formed on the corresponding sides thereof is bonded to the inner surface of a truncated portion of the casing 22. Two terminal pins serving as electrode terminals 24 are attached to the bottom plate 22 in such a manner as to penetrate through the same. The two electrode terminals 24 are electrically connected to the corresponding terminals of the piezoelectric element 23. When the ultrasonic transmitter-receiver 20 is used as the ultrasonic transmitter 3, 3a, or 3b, an alternating voltage is applied to the electrodes of the piezoelectric element 23 from the electrode terminals 24, thereby generating ultrasonic vibrations. When the ultrasonic transmitter-receiver 20 is used as the ultrasonic receiver 4, 4a, or 4b, ultrasonic waves received through the truncated portion of the casing 22 are converted to a signal voltage by means of the piezoelectric element 23. The signal voltage is output from the electrode terminals 24. The configuration of the ultrasonic transmitter-receiver 20 is not particularly limited. For example, a casing formed of plastic foam may replace the casing 22.

As described above, the vortex flowmeter of the present invention includes a first vortex-generating body disposed within a pipe for generating a Karman vortex for a flow in one direction, a second vortex-generating body disposed within the pipe for generating a Karman vortex for a flow in the opposite direction, and vortex detection means for detecting a Karman vortex generated by each of the vortex-generating bodies. In contrast to a conventional vortex flowmeter which utilizes a Karman vortex in measurement of flow rate and can merely detect the flow rate of fluid flowing in a single direction, the vortex flowmeter of the invention can detect the flow rate of fluid flowing bidirectionally through the same pipe and thus can be used in various applications.

For application to the case where backward flow is generated in fluid flowing through a pipe in a regular direction to thereby cause a pulsating flow, the vortex flowmeter of the present invention includes a first vortex-generating body disposed within the pipe for generating a Karman vortex for a flow in the regular direction, a second vortex-generating body disposed within the pipe for generating a Karman vortex for a flow in the opposite direction, and vortex detection means for detecting the Karman vortexes, and determines a flow rate by means of subtraction performed on output values represented by, for example, the number of pulses. Thus, when the flow rate of, for example, blow-by gas of an industrial vehicle is measured, the influence of backward flow on the regular flow is taken into account through the subtraction to thereby determine a most possibly accurate flow rate. Therefore, the present invention contributes to proper management of various kinds of equipment.

When the first and second vortex detection means share a common ultrasonic transmitter, the number of components can be reduced, thereby reducing the cost of apparatus.

## Claims

1. A vortex flowmeter comprising a first vortex-generating body (2a) disposed within a pipe (1) for generating a Karman vortex (m) for a flow in one direction (α), a second vortex-generating body (2b) disposed within the pipe (1) for generating a Karman vortex (m) for a flow in the opposite direction (β), and a vortex detection means (X, Y, Z) for detecting a Karman vortex (m) generated by at least one of the first vortex-generating body (2a) and the second vortex-generating body (2b).

2. A vortex flowmeter according to Claim 1, wherein a common vortex generation region (f) is established between said first and second vortex-generating bodies (2a, 2b) such that the first and second vortex-generating bodies (2a, 2b) cause generation of a Karman vortex (m) therein, the vortex flowmeter further comprising a single vortex detection means (Z) for detecting a Karman vortex (m) generated in the common vortex generation region (f).

3. A vortex flowmeter comprising a first vortex-generating body (2a) disposed within a pipe (1) for generating a Karman vortex (m) for a flow in a regular direction (α), a second vortex-generating body (2a) disposed within the pipe (1) for generating a Karman vortex (m) for a flow in the opposite direction (β), first vortex detection means (X) for detecting a Karman vortex (m) generated by means of the first vortex-generating body (2a), and second vortex detection means (Y) for detecting a Karman vortex (m) generated by means of the second vortex-generating body (2b), the vortex flowmeter further comprising a subtractor (10) for subtracting an output from the second vortex detection means (Y) from an output from the first vortex detection means (X) to thereby detect a flow rate.

4. A vortex flowmeter according to any one of Claims 1 to 3, wherein the or each vortex detection means (X, Y, Z) comprises: (i) a pair of an ultrasonic transmitter (3, 3a, 3b) and an ultrasonic receiver (4, 4a, 4b) disposed on opposite sides of a Karman vortex generation region (f); and (ii) a vortex signal receiver circuit (6, 6a, 6b) for generating a vortex signal corresponding to generation of a Karman vortex (m) on the basis of a received-wave signal of the ultrasonic receiver (4, 4a, 4b).

5. A vortex flowmeter according to any one of Claims 1 to 3, comprising first vortex detection means (X) for detecting a Karman vortex (m) generated by means of the first vortex-generating body (2a) and second vortex detection means (Y) for detecting a Karman vortex (m) generated by means of the second vortex-generating body (2b), and wherein each of the first and second vortex detection means (X, Y) comprises: (i) a pair of an ultrasonic transmitter (3) and an ultrasonic receiver (4a, 4b) disposed on opposite sides of a Karman vortex generation region (f); and (ii) a vortex signal receiver circuit (6a, 6b) for generating a vortex signal corresponding to generation of a Karman vortex (m) on the basis of a received-wave signal of the ultrasonic receiver (4a, 4b), wherein a common ultrasonic transmitter (3) is shared as the ultrasonic transmitter of the first and second vortex detection means (4a, 4b).

6. A vortex flowmeter according to claim 2, comprising not more than one vortex detection means (Z) for detecting a Karman vortex (m) generated in the common vortex generation region (f).

7. A vortex flowmeter according to claim 1, wherein said first and second vortex-generating bodies (2a, 2b) are disposed relative to one another so as to establish a common vortex generation region (f) therebetween, said vortex detection means (X, Y) comprising a commonly shared ultrasonic transmitter (5) and first and second ultrasonic receivers (4a, 4b) disposed on opposite sides of the common vortex generation region (f) for detecting Karman vortexes (m) generated by the first and second vortex-generating bodies (2a, 2b), respectively.

8. A vortex flowmeter according to claim 1, comprising a first vortex detection means (X) for detecting a Karman vortex (m) generated by the first vortex-generating body (2a) in a first Karman vortex generation region and a second vortex detection means (Y) for detecting a Karman vortex generated by the second vortex-generating body (2b) in a second Karman vortex generation region, wherein the first vortex detection means (X) comprises (i) a pair of a first ultrasonic transmitter (5a) and a first ultrasonic receiver (4a) disposed on opposite sides of the first Karman vortex generation region, and (ii) a first vortex signal receiver circuit (6a) for generating a vortex signal corresponding to generation of a Karman vortex based on a received-wave signal of the first ultrasonic receiver (4a), and the second vortex detection means (Y) comprises (i) a pair of a second ultrasonic transmitter (5b) and a second ultrasonic receiver (4b) disposed on opposite sides of the second Karman vortex generation region, and (ii) a second vortex signal receiver circuit (6b) for generating a vortex signal corresponding to generation of a Karman vortex based on a received-wave signal of the second ultrasonic receiver (4b).
